# EUROPEAN PATENT APPLICATION

(11) **EP 4 674 726 A1**
(43) Date of publication of application: **07.01.2026**
(21) Application number: 24186747.2
(22) Date of filing: 05.07.2024
(51) Int. Cl.: B62D 5/06, B62D 5/30

(54) **FAILURE RESISTANT HYDRAULIC STEERING SYSTEM**

(71) Applicant: Danfoss Power Solutions ApS, 6430 Nordborg (DK)
(72) Inventor: PETERSEN, Morten Hoeck, 6230 Rodekro (DK)
(74) Representative: Nestler, Jan Hendrik

(57) **Abstract**

The invention relates to a hydraulic steering system (1, 47, 54, 62) that comprises a hydraulic steering unit (3) and a plurality of directly connected hydraulic conduits (18, 22, 42, 61). The directly connected hydraulic conduits (18, 22, 42, 61) are directly connected to the hydraulic steering unit (3). At least one of the directly connected hydraulic conduits (18, 22, 42, 61) comprises a fluid branch connection (21, 23, 41) that diverges at least one of the directly connected hydraulic conduits (18, 22, 42, 61) to at least two indirectly connected hydraulic conduits (14, 15, 28, 29, 35, 36). The at least two indirectly connected hydraulic conduits (14, 15, 28, 29, 35, 36) comprise at least one fluid flow influencing means (19, 20, 26, 27, 37, 38, 43, 44, 45, 46, 48, 49, 50, 51), respectively.

## Description

The invention relates to a hydraulic steering system comprising a hydraulic steering unit and a plurality of hydraulic conduits.

Hydraulic steering systems are, as such, known in the prior art. They are particularly used for heavy work machinery, like shovel dozers, tractors, forklift trucks, telehandlers, dumpers and the like. Generally speaking, they are used when a lot of steering work is to be performed at slow speeds of heavy vehicles, at least in certain operational conditions of the vehicles. This is because small actuating forces can be translated into large steering forces that actuate on the axles/wheels of the vehicle, thanks to the hydraulic system. It is to be noted that not only a mechanical steering input, like the steering input of a steering wheel is translated into higher steering forces. In the meantime, steering inputs that are made by a joystick or by an autonomous systems are regularly output as steering forces onto the wheels/axles of the vehicle.

However, it is to be noted that the steering of a vehicle is a very safety relevant system (at least as safety relevant as the braking system of the vehicle; perhaps even more important than the braking system). Therefore, regularly some kind of redundancy is desired by the operator of the vehicle. For higher maximum driving speeds of the vehicle, such redundant systems are even required by law, at least under certain jurisdictions. An example for such a regulation is the requirement that vehicles that are able to drive a top speeds of 60 km/h or higher are required to have fully redundant hydraulic fluid hoses for steering purposes, in case that flexible transmission lines (hoses) are used. If only a single hydraulic fluid transmission line is to be used, then so-to-say hard-shell / inflexible tubes / pipes are required. The use of hard tubes/pipes, however, is quite cumbersome and problematic to realise for certain types of machinery.

Hence, despite of the requirement of redundancy (and the additional and more complex mechanical setup required due to this), steering systems with flexible hoses are regularly employed. According to the prior art, the redundancy requirement is regularly dealt with by providing two steering units - i.e. the devices that translate mechanical or electrical steering input into an appropriate hydraulic fluid output that is directed to two separate steering pistons that are connected to the steered device (wheel, axle). Accordingly, an appropriate number of hydraulic hoses (i.e. twice as much hoses) are used to connect the various components fluidly. Even further, frequently two hydraulic pumps are used for supplying the steering units. As a bottom line: the cost is essentially doubled. It is not surprising that such a comparatively complex and costly design is undesired.

As already mentioned, hydraulic circuits with a single steering unit and a single steering actuating piston are known in the prior art. An example of such an arrangement is described in US 6,131,687 A. However, such an arrangement is legally not allowed to be used in combination with flexible hoses in certain jurisdictions. Even if it is allowed, it is nevertheless undesired due to the safety issues involved.

If, however, hoses are employed, a design, as described in EP 2 186 718 A (just to name an example) is to be employed, where two hydraulic pumps, two steering units and two steering actuating pistons are used.

It is therefore desired to have a system that shows a sufficiently high redundancy (either for legal requirements or for safety considerations) that is nevertheless cheaply and easily to be realised.

It is therefore an object of the invention to propose a hydraulic steering system that comprises a hydraulic steering unit and a plurality of hydraulic conduits that is improved over hydraulic steering systems of this type, as they are known in the state-of-the-art.

A hydraulic steering system according to claim 1 solves this object.

It is suggested to design a hydraulic steering system that comprises a hydraulic steering unit and a plurality of directly connected hydraulic conduits that are directly connected to the hydraulic steering unit, wherein at least one of the directly connected hydraulic conduits comprises a fluid branch connection that diverges at least one of the directly connected hydraulic conduits to at least two indirectly connected hydraulic conduits in a way that the at least two indirectly connected hydraulic conduits comprise at least one fluid flow influencing means, respectively. I.e. preferably for every directly connected hydraulic circuit that comprises a fluid branch into two indirectly connected hydraulic conduits, each of the at least two indirectly connected hydraulic conduits does comprise at least one fluid flow influencing means.

The hydraulic steering unit may be any type of device that is known in the state-of-the-art and/or that may be used for this purpose. In particular, a (cross-) directional valve with variable fluid output may be used for this. In particular, the direction of the fluid output has to be changed. Furthermore, preferably the amount of fluid output should be changed as well. Even further, a passive position, in which no fluid output flow is sent out may be present. The actuation of the hydraulic steering unit may be performed in a mechanical way, for example by a steering wheel, a mechanical lever, or the like. However, an electrical input might be possible as well. Therefore, the electric output signal of a joystick, an autonomous driving system or the like may be used as a steering command that is appropriately translated into a steering movement. Further, an electric motor (for example, but not limited to this, a stepper motor) might actuate the hydraulic steering unit in a mechanical way (where the electic motor is usually electrically actuated, of course). In particular, a combination of both a mechanical and an electrical input might be envisioned as well. This may be the case at the same time (for example, to electronically correct a steering input as a kind of a safety device/assistance system). However, the input may be made alternatively, as well. As an example for the latter, a vehicle can be steered mechanically using a steering wheel when driving on a road, while it can be steered electrically using a joystick when it is used on a construction site, doing excavating work or the like. The directly connected, hydraulic conduits may be of essentially any type, at least in principle. Typically, it is preferred that they are - either for safety considerations and/or possibly for legal reasons - of a solid tube/pipe design. However, even a flexible hose might be employed (in particular a solidity-enhanced flexible hose). Irrespective of the design, it is proposed that the directly connected hydraulic conduits show a higher resilience against fluid leakage, damage, fluid breaks or the like, as compared to the indirectly connected hydraulic conduits (in particular the part that is past the respective fluid flow influencing means). This way, it is possible to ensure a high safety level for the critical parts of the hydraulic steering system. At the same time, cost can be saved and/or a more flexible design approach can be used particularly for the parts that are located past the at least one fluid flow influencing means, while still providing a very high safety level, since those parts are typically provided in a somewhat redundant way. In other words, in case of a fault of those parts of the hydraulic steering system, a fallback state may be realised.

The fluid branch connection may be a simple T or Y fluid flow connector. The possible fluid flow cross-sections of the respective connection joints may be the same. Preferably, the fluid flow cross-sections may be adapted in a way to consider the fluid flux split-up due to the fluid branching effect. As an example, the common connection that is connected to the directly connected, hydraulic conduit may show approximately twice the amount of the possible fluid flow rate, as compared to each of the branches of fluid flow connections that are directed to the indirectly connected hydraulic conduits (in case of two indirectly connected conduits; in case of three indirectly connected conduits, a third of the "directly connected fluid flow rate" might be used, and so on).

However, additionally or alternatively so-called flow dividers may be used. Flow dividers are - as such - known in the prior art. In particular, the flow divider may be of a spool divider type and/or of a gear-type divider type (more preferably of gerotor-type divider type).

It is to be noted that different fluid branch connections may be used in the presently proposed hydraulic steering system. As an example, a T-shaped and/or a Y-shaped fluid flow connector (or a plurality thereof) might be used on the hydraulic fluid supply side of the hydraulic steering system, while a flow divider (or a plurality thereof) may be used on the hydraulic steering actuator side of the hydraulic steering system (or vice versa).

When talking about a directly connected hydraulic conduit, this is usually to be interpreted in a way that no (additional/other) fluid flow influencing means is present between the hydraulic steering unit and the fluid branch connector / the fluid flow influencing means that significantly influences the fluid flow. I.e., no fluid flow restriction orifices, check valves or the like should be present. However, a fluid coupling, a flange connector and the like may certainly be used, although - from a strict fluid dynamic view even such devices do have a certain influence on the fluid flow. Nevertheless, such devices are still to be considered as a direct connection according to the present context.

It is to be noted that the indirectly connected hydraulic conduits usually do show two functional sections, i.e., one ahead of the respective fluid flow influencing means (singular or plural), and one past the at least one fluid flow influencing means. In particular, those parts of the indirectly connected hydraulic conduits that lie between the fluid branch connection and the fluid flow influencing means should preferably show the same safety level, as the directly connected hydraulic conduits. I.e. this part of the indirectly connected hydraulic conduit should show a higher safety level as compared to the corresponding indirectly connected hydraulic conduit part that lies beyond the respective fluid flow influencing means.

However, a different interpretational view may be used as well, where all parts that lie before the fluid flow influencing means may be considered to be directly connected hydraulic conduits, while only those parts of the hydraulic conduits that lie past the respective fluid flow influencing means are considered to be indirectly connected hydraulic conduits. In other words, the hydraulic conduits that lie between a fluid branch connection and a fluid flow influencing means are to be considered as directly connected hydraulic conduits. Additionally or alternatively, the situation might be considered in a way that the fluid branch connection is not considered as a device that is sufficiently strongly altering the fluid flow behaviour of the conduits, so that is to be somehow equivalent to a fluid coupling, fluid flange or the like, as mentioned before.

The at least one fluid flow influencing means may be of any type that is sufficiently strongly influencing the fluid flow behaviour, so that some kind of a redundancy can be reached by its use. A person skilled in the art with the knowledge of the present disclosure will be readily able to decide on the presence or absence of this functional feature. Only as an example, check valves, fluid flow restriction orifices, pressure-dependent shut-off valves or the like may be used for this purpose and/or may fulfil this characteristic. Typically, one fluid flow influencing means per indirectly connected hydraulic conduit may be sufficient for realising some kind of a redundancy. Nevertheless, using two or more fluid flow influencing means for a single indirectly connected hydraulic conduit (this may apply for a plurality or even essentially all indirectly connected hydraulic conduits, respectively) may enhance the safety level / redundancy / efficiency of the arrangement. This may include the possibility to prolong the time before a system failure occurs. In this context it should be mentioned, that a redundancy/increased safety/fallback position may be seen as being present, if a steering behaviour (or even only a reduced steering behaviour) will only remain present for some time (for example, for a couple of seconds or a couple of 10 seconds (a couple of Deka-seconds) ). This is because this remaining time can be used for effectuating a controlled emergency/safety stop of the vehicle. This may prove to be sufficient to avoid any accident.

It is possible to design the hydraulic steering system in a way that at least one of said fluid flow influencing means is designed and arranged as a check valve, in particular when being used for a hydraulic fluid supply conduit. Additionally, or alternatively, the hydraulic steering system may be designed and arranged in a way that at least one of said fluid flow influencing means is designed as a fluid flow restriction means, preferably as a pressure dependent fluid flow restriction means, in particular when being used for a hydraulic steering actuator line. This way, a hydraulic steering system according to the present disclosure may show a particularly high, cost-effective and comparatively long endurable redundancy in case of a failure, in particular in case of failure of an indirectly connected hydraulic conduit (in particular of an indirectly connected hydraulic conduit that lies past a fluid branch connection). A hydraulic fluid supply conduit is particularly considered to be a conduit that supplies a hydraulic pump / fluid supply source, and in turn the respective hydraulic steering unit, with pressurised hydraulic fluid. It may be a connection to a fluid reservoir, a source of pressurised fluid (like the hydraulic pump), a hydraulic accumulator, a connection to a low pressurised fluid line (for example, a return line, in particular of closed circuit hydraulic circuit; possibly even a high pressure line of a closed-loop hydraulic circuit), or the like. A hydraulic steering actuator line is usually a line that goes to an actual hydraulic steering actuator, i.e. that leaves the hydraulic steering unit towards a steering piston and/or that is placed between the hydraulic steering unit and the respective steering actuator, or similar device.

Even further, it is suggested to design and arrange the hydraulic steering system in a way that the hydraulic steering system comprises at least one hydraulic pump, wherein at least one of the hydraulic fluid supply conduits is connected to said hydraulic pump. This way, a dedicated and reliable source of sufficiently pressurised hydraulic fluid can be provided. It is even possible to provide a plurality of hydraulic pumps, in particular, one hydraulic pump per hydraulic fluid supply conduit, to even further increase redundancy and/or reliability of the hydraulic steering system. It is to be noted that - albeit a certain pressure has to be provided - the hydraulic pressures that are required, and/or usually be used for hydraulic steering systems are still comparatively low (for example, 30 to 50 bars) and/or the fluid flow rates that are usually used for/that are required for hydraulic steering systems are comparatively small, so that a hydraulic pump that may be used for this purpose is comparatively inexpensive. Thus, even then a quite cost-efficient solution can be provided. Yet further, it is suggested to design and arrange the hydraulic steering system in a way, that the hydraulic steering system comprises at least one hydraulic steering actuator, wherein at least one hydraulic steering actuator line is connected to said hydraulic steering actuator. This way, a hydraulic steering system can be provided that can rely on parts that are widely available on the market. This, of course, can increase the cost efficiency of the hydraulic steering system. Even further, it is even possible to employ the presently proposed hydraulic steering system in combination with already present machinery and/or with already designed machinery with only comparatively small adaptions in design. This, of course, further increases cost efficiency, and in particular may ensure easier acceptance of the presently proposed design of a hydraulic steering system.

Furthermore, it is suggested to design and arrange the presently proposed hydraulic steering system in a way that at least two hydraulic steering actuators are provided, wherein preferably each of said at least two hydraulic steering actuators is supplied by at least one individual hydraulic steering actuator line. This way, the safety and reliability of the arrangement can be further increased. In this context it is to be noted that particularly the hydraulic conduits between the hydraulic steering unit and the hydraulic steering actuator are comparatively long and/or are particularly prone to damage and wear. Therefore, by this proposal the redundancy of parts that are most prone to failure can be increased, therefore providing a significant increase of the safety level of the arrangement.

Nevertheless, it is also possible to design and arrange the hydraulic steering system in a way that two hydraulic steering lines are rejoined by means of a second fluid branch connection, preferably using a second fluid flow restriction means, so that a combined direct hydraulic steering actuator line feeds a single steering piston. Again, a redundancy of the most damage-prone parts can be provided. By the presently proposed "rejoining of the conduits" for feeding a single steering actuator, the cost efficiency of the arrangement can be further increased without any relevant decrease of the safety level. This is of course advantageous. Furthermore, by using only a single steering piston, the mounting volume of the arrangement may be decreased, which may be a considerable advantage.

Yet further, it is proposed to design and arrange the hydraulic steering system in a way that at least one, preferably a plurality, more preferably at least essentially all directly connected hydraulic conduits are designed and arranged as a fluid tube. Additionally, or alternatively, the hydraulic steering system may be designed and arranged in a way that at least a part of at least one, preferably a plurality, more preferably at least essentially all indirectly connected hydraulic conduits are designed and arranged as fluid hoses, preferably at least in the section behind the at least one fluid flow influencing means. This way, a very good compromise between a high safety of the hydraulic steering system, together with a high flexibility and cost efficiency of the presently proposed hydraulic steering system may be realised. In particular, certain legal requirements and/ or at least certain safety requirements/wishes can advantageously be complied with in a highly cost-efficient way.

Yet further, it is proposed to design and arrange the hydraulic steering system in a way that at least a directly connected hydraulic return conduit is directly connected to the hydraulic steering unit, wherein the directly connected hydraulic conduit comprises a fluid branch connection that diverges at least one of the directly connected hydraulic conduits to at least two indirectly connected hydraulic conduits, preferably in a way that the at least two indirectly connected hydraulic conduits comprise at least one fluid flow influencing means, respectively. This way, the presently proposed idea of an advantageous design for the fluid supply section of a hydraulic steering system may be applied to the fluid return line section as well, at least in part, and/or at least in analogy. This may further increase the reliability and safety of the system. Furthermore, it is to be noted that this way the presently proposed hydraulic steering system can be used in combination with a presently used machinery/presently available design of machinery, with less required adaptions. This of course advantageously increases acceptance of the hydraulic steering system.

Yet further, it is proposed to design and arrange the hydraulic steering system in a way that at least one hydraulic return conduit is designed and arranged correspondingly to at least one hydraulic conduit, preferably to the corresponding hydraulic conduit. Again, this way, the amount of adaptions (if required all) of existing machinery that has to be performed, so that they can be used with the presently proposed hydraulic steering system, can be even further reduced. As an example: if a hydraulic conduit on the fluid supply side of the hydraulic steering system uses a check valve, the corresponding hydraulic conduits should comprise a check valve as well. The same applies mutatis mutandis, if a fluid flow restriction means is used (just to give another example).

Yet further, it is suggested to design and arrange the hydraulic steering system in a way that a single hydraulic steering unit is provided, in particular for a single steering task. This way, the presently proposed hydraulic steering system can be particularly cost efficient.

Yet further, is suggested to design and arrange the presently proposed hydraulic steering system in a way that the hydraulic steering unit is a mechanically operated steering unit, an electrically operated steering unit, or a combination of both. This way, the presently proposed hydraulic steering system can fulfil frequently demanded features in the present field of technology.

Yet further, it is proposed to design and arrange a hydraulic steering system in a way that it comprises at least one fluid leakage detector, at least one fluid leakage alerting mechanism and/or at least one fluid leakage emergency mode operation. This way, in case of a fault that causes the hydraulic steering system to run in its backup mode may trigger the operator to bring the machinery to safe stop, or may even automatically bring the machinery to a safe stop. During this "grace time" the hydraulic steering system is still sufficiently operative to maintain a sufficient safety level. However, is to be noted that the layer of the fallback system has been reached and no further fall backs/redundancies are present, so that a continued operation of the machinery is highly discouraged.

Further advantages, features, and objects of the invention will be apparent from the following detailed description of the invention in connection with the associated drawings, wherein the drawings show:
- Fig. 1:: a first possible embodiment of a hydraulic steering system according to the present disclosure in a schematic circuitry;
- Fig. 2:: a second possible embodiment of a hydraulic steering system according to the present disclosure in a schematic circuitry;
- Fig. 3:: a third possible embodiment of a hydraulic steering system according to the present disclosure in a schematic circuitry;
- Fig. 4:: a fourth possible embodiment of a hydraulic steering system according to the present disclosure in a schematic circuitry.

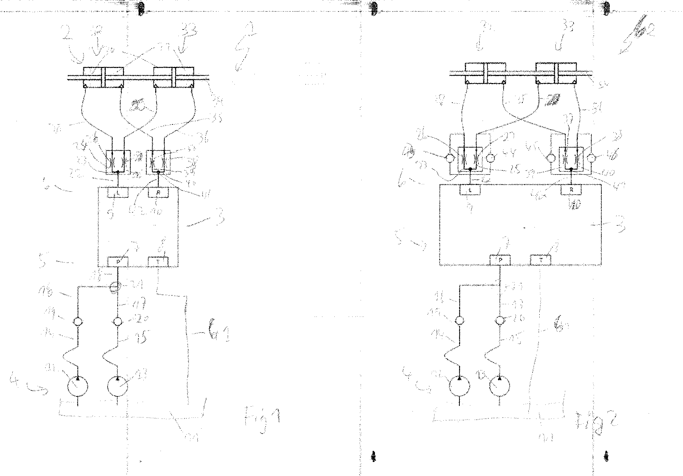

Fig. 1 shows a first possible embodiment of a hydraulic circuit system 1 according to the present disclosure as a schematic circuitry. The hydraulic steering system 1 comprises a steering actuator arrangement 2, a steering unit 3, and a hydraulic fluid supply 4. The various components 2, 3, 4 are interconnected by a plurality of hydraulic conduits, as will be explained in more detail in the following.

As usual, the steering unit 3 comprises a fluid supply side 5 and a steering side 6, with two fluid ports on each of said sides 5, 6. Namely, on the fluid supply side 5, a pressurised fluid port 7 and a fluid return port 8 is present. On the steering side 6, a left port 9 and a right port 10 are arranged. The left port 9 will be pressurised by the steering unit 3, so as to effectuate an increasing steering movement to the left. Usually, with most steering actuator arrangements 2 (as it is presently the case as well), this will result in fluid return flow toward the right port 10. Then, the return fluid arriving a right port 10 will be directed to fluid return port 8.

In case an increasing rightward steering lock is requested, right port 10 will be pressurized, and left port 9 will serve as a fluid return port (being short-circuited to fluid return port 8).

It is to be noted that, depending on the degree of requested steering, only a fraction of the pressurised fluid that is supplied at a pressurised fluid port 7 will actually be forwarded to left port 9 or right port 10 (partial steering). Indeed, if no steering is requested, left port 9 and right port 10 will be just locked off, so that any fluid throughput therethrough is hindered.

Fluid is provided from a fluid reservoir 11 to the pressurised fluid port 7 of steering unit 3 by means of presently two separately operated fluid pumps 12, 13. The pumps 12, 13 are connected by means of respective separate elastic fluid supply hoses 14, 15, separate fluid supply tubes 16, 17, and finally common fluid supply tube 18. Between the separate elastic fluid supply hose 14 and its continuation via separate fluid supply tube 16, a check valve 19 is arranged. Similarly, between separate elastic fluid supply hose 15 and separate fluid supply tube 17, a check valve 20 is arranged. Both check valves 19, 20 open in the direction toward the steering unit 3, and close in the direction towards fluid reservoir 11.

Separate fluid supply tubes 16, 17 are connected to each other, joining the respective fluid fluxes towards common fluid supply tube 18 by means of fluid branch connection 21 that is presently of a Y-shaped, fluid branching connector type.

Now, if one of the separate elastic fluid hoses 14, 15 will break, the check valve 19, 20 that connects to the fluid hose 14, 15 with a break will close, while the other one will remain open. Therefore, it is obvious that hydraulic fluid is still supplied by the respective fluid pump 12, 13 and the steering is still operational via the other fluid connection 14, 19, 16, 21, 18 or 15, 20, 17, 21, 18 (depending on whether fluid hose 15 or 14 broke).

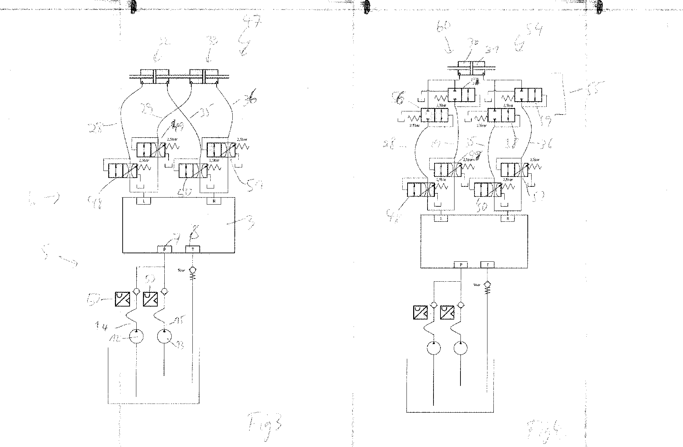

Undoubtedly, the broken elastic fluid supply hose 14, 15 will lead to a spill of hydraulic fluid since the corresponding hydraulic pump 12, 13, continues to pump hydraulic oil. This will lead to a loss of hydraulic fluid in the fluid reservoir 11 over time. This can be detected by a fluid leakage sensor, a fluid level sensor, pressure transducers 52, 53 (see Figs. 3 and 4) or some other type of sensor. Nevertheless, the hydraulic steering system 1 remains operational for a sufficient time so as to be able to bring the vehicle, the hydraulic steering system 1 is used for, to a safe stop.

It is therefore obvious that thanks to the redundancy of the fluid supply side 5 with respect to the elastic hose parts 14, 15, a high level of safety can be provided and possibly legal requirements can be obeyed, although a single steering unit 3 is used. The cost saving is obvious.

However, not only on the fluid supply side 5 a the redundancy is present, but also on the steering side 6 of the hydraulic steering system 1.

Without limiting the general applicability, the following discussion assumes a steering command to the left. However, the explanations can be easily adapted to a steering to the right by a person skilled in the art when he has read the present disclosure.

Due to the leftward steering actuation of steering unit 3, left port 9 is supplied with pressurised hydraulic fluid. The pressurised hydraulic fluid leaves left port 9 and passes through common steering actuation pipe 22. The fluid flux is split up by means of another fluid branch connector 23, and respective separate steering actuation pipes 24, 25 feed the respective fluid flux through two separate fluid flow restriction means 26, 27, two respective separate elastic steering actuation hoses 28, 29, and finally to respective left fluid chambers 30 of steering cylinders 32, 33. Thanks to the inflow of hydraulic fluid to the respective left piston chambers 30, a common steering rod 34 will lead to an appropriate steering actuation of the respective wheels/axle.

The respective right fluid chambers 31 of the two steering cylinders 32, 33 will return the fluid in an analogous way through separate elastic steering actuation hoses 35, 36, fluid flow restriction means 37, 38, separate steering actuation pipes 39, 40, fluid branching connector 41 and common steering actuation pipe 42 to right port 10.

Now, if on the pressurised side (fluid conduits that are connected to left port 9) one of the separate elastic steering actuation hoses 28, 29 breaks, again, a spill of fluid will occur. Nevertheless, thanks to the fluid flow restriction means 26, 27, only a limited fluid flux is allowed through the respective restriction means 26, 27, which means that a sufficiently high pressure will be maintained in common steering actuation pipe 22. Therefore, a sufficient amount of sufficiently pressurised hydraulic fluid will pass through the intact branch of either separate steering actuation pipe 24, separate fluid flow restriction means 26 and separate steering actuation hose 28 to first steering cylinder 32 or through separate steering actuation pipe 25, separate fluid flow restriction means 27 and separate steering actuation hose 29 to second steering cylinder 33 (depending on which elastic steering actuation hose 29, 28 broke).

Therefore, even in case of a failure of one separate elastic steering actuation hose 28, 29, the hydraulic steering system 1 remains operational thanks to the redundancies provided.

The same applies mutatis mutandis for the return lines 35, 36, 37, 38, 39, 40, 41 and 42.

In case the right port 10 is pressurised to effectuate the afore said applies, although the described pipes, hoses, restriction means and branch connectors have to be replaced by the appropriate numbering.

The fluid return port 8 will eject returning fluid. This hydraulic fluid is returned via fluid return line 61 to fluid reservoir 11.

Even if fluid return line 41 is a rubber hose, this is not problematic with respect to safety, since a break of the respective conduit 61 will not cause an immediate failure of the hydraulic steering system 1.

However, the hydraulic fluid level in the fluid reservoir 11 will drop with time. Nevertheless, with appropriate sensors or the like, this can be detected and a safety stop can be effectuated well in time.

Fig. 2 shows a second possible embodiment of a hydraulic steering system 62 as a schematic circuitry. The hydraulic steering system 62 is highly similar to the afore described hydraulic steering system 1 according to Fig. 1. Therefore, identical reference numerals are used for parts and devices that are sufficiently similar in either design and/or functionality so that the use of identical reference numerals seems to be justified for a person skilled in the art.

The relevant difference is that a plurality of check valves 43, 44, 45, 46 is provided. Check valve 43 is arranged parallel to separate fluid flow restriction means 26; check valve 44 is parallel to separate fluid flow restriction means 27; check valve 45 is parallel to separate fluid flow restriction means 37; and check valve 46 is parallel to separate fluid flow restriction means 38. The check valves 43, 44, 45, 46 open in a direction so that an uninterrupted fluid flow from the steering cylinders 32, 33 back to the steering unit 5 is provided. Therefore, the efficiency of the system can be increased.

Fig. 3 and Fig. 4 show further modifications of a hydraulic steering system 47, 54 according to the present disclosure.

In Fig. 3, instead of simple fluid flow restriction means 26, 27, 37, 38, pressure-dependent fluid flow restriction means 48, 49, 50, 51 (being pressure dependent on separate steering actuation hoses 28, 29, 35, 36) are used.

Therefore, if the separate steering actuation hoses 28, 29, 35, 36 are intact, sufficient pressure is present in the respective hoses 28, 29, 35, 36, so that the spools of the respective pressure-dependent fluid flow restriction means 48, 49, 50, 51 are moved in a position, in which the fluid flow throughput is essentially unhindered. This reduces fluid flow resistance effects, and therefore increases the effectivity of the hydraulic steering system 47.

If, however, one of the hoses breaks 28, 29, 35, 36, for example separate steering actuator hose 29, the fluid pressure in this hose will drop to ambient pressure, and the respective pressure-dependent fluid flow restriction means 49 will move into a position with high fluid flow restriction.

It is to be noted that during the start-up of the hydraulic steering system 47 (in particular the beginning of a steering process), the respective hoses are typically at a low pressure. However, a pressurisation may occur even through the high fluid flow restriction orifice of the respective pressure-dependent fluid flow restriction means 48, 49, 50, 51. Once a sufficiently high pressure is achieved, the respective pressure-dependent fluid flow restrictions means 48, 49, 50, 51 will switch to its respective open state.

Furthermore, on the fluid supply side 5 of hydraulic steering system 47, the respective separate fluid supply hoses 14, 15 are presently provided with a respective pressure transducer 52, 53. If a pressure drop is detected by a pressure transducer 52, 53, the respective fluid pump 12, 13 will be switched off (or its fluid pumping rate is reduced) so as to avoid the spill of hydraulic fluid.

Fig. 4 shows yet another modification of a hydraulic steering system 54 in a schematic circuitry.

Here, the separate steering actuation hoses 28, 29, 35, 36 are rejoined by rejoining circuitry 55, comprising an appropriate arrangement of fluid flow restriction means (presently pressure-dependent fluid flow restriction means 56, 57, 58, 59 - similar to pressure-dependent fluid flow restriction means 48, 49, 50, 51 are used; however, not-pressure-dependent fluid flow restriction means - similar to fluid flow restriction means 26, 27, 37, 38 - could be used). Actually, it is even possible that the respective pressure-dependent fluid flow restriction means 56, 57, 58, 59 may be switched to a fully closed fluid flow position (instead of highly fluid flow restriction position), since in the final tubes of the rejoining section 55 no initial pressurisation is needed to be able to initiate a leftward or rightward steering mode.

The outputs of the respective fluid flow restriction means 56, 57 on one hand, and fluid flow restriction means 58, 59 on the other hand, are rejoined by a fluid branching means and are allowed to enter either left piston chamber 30 or right piston chamber 31 of the single steering cylinder 60.

It is acknowledged that the cost savings by reducing the number of steering cylinders 32, 33 to only a single steering cylinder 60 is somewhat counteracted by the requirement to use additional pressure dependent fluid flow restriction means 56, 57, 58, 59. However, it is to be noted that this may result in a non-negligible reduction in mounting volume.

It is to be noted that a single one or a plurality of the features of one, several or all of the presently disclosed detailed embodiments may be used in combination with the generic description of the present disclosure.

## Claims

1. Hydraulic steering system (1, 47, 54, 62), comprising a hydraulic steering unit (3), and a plurality of directly connected hydraulic conduits (18, 22, 42, 61) that are directly connected to the hydraulic steering unit (3), wherein at least one of the directly connected hydraulic conduits (18, 22, 42, 61) comprises a fluid branch connection (21, 23, 41) that diverges at least one of the directly connected hydraulic conduits (18, 22, 42, 61) to at least two indirectly connected hydraulic conduits (14, 15, 28, 29, 35, 36), **characterised in that** the at least two indirectly connected hydraulic conduits (14, 15, 28, 29, 35, 36) comprise at least one fluid flow influencing means (19, 20, 26, 27, 37, 38, 43, 44, 45, 46, 48, 49, 50, 51), respectively.

2. Hydraulic steering system (1, 47, 54, 62) according to claim 1, **characterised in that** at least one of said fluid flow influencing means (19, 20, 26, 27, 37, 38, 43, 44, 45, 46, 48, 49, 50, 51) is designed and arranged as a check valve (19, 20, 43, 44, 45, 46), in particular when used for a hydraulic fluid supply conduit (14, 15) and/or **characterised in that** at least one of said fluid flow influencing means (19, 20, 26, 27, 37, 38, 43, 44, 45, 46, 48, 49, 50, 51) is designed as a fluid flow restriction means (26, 27, 37, 38, 48, 49, 50, 51), preferably as a pressure dependent fluid flow restriction means (48, 49, 50, 51), in particular when used for a hydraulic steering actuator line (28, 29, 34, 35).

3. Hydraulic steering system (1, 47, 54, 62) according to claim 1 or 2, **characterised in that** the hydraulic steering system (1, 47, 54, 62) comprises at least one hydraulic pump (12, 13), wherein at least one of the hydraulic fluid supply conduits (14, 15) is connected to said hydraulic pump (12, 13).

4. Hydraulic steering system (1, 47, 54, 62) according to any of the preceding claims, **characterised in that** the hydraulic steering system (1, 47, 54, 62) comprises at least one hydraulic steering actuator (32, 33, 60), wherein at least one hydraulic steering actuator line (28, 29, 34, 35) is connected to said hydraulic steering actuator (32, 33, 60).

5. Hydraulic steering system (1, 47, 54, 62) according to any of the preceding claims, in particular according to claim 4, **characterised in that** at least two hydraulic steering actuators (32, 33) are provided, wherein preferably each of said at least two hydraulic steering actuators (32, 33) is supplied by at least one individual hydraulic steering actuator line (28, 29, 34, 35).

6. Hydraulic steering system (1, 47, 54, 62) according to any of the preceding claims, in particular according to claim 4, **characterised in that** two hydraulic steering lines (28, 29, 34, 35) rejoined by means of a second fluid branch connection (55), preferably using a second fluid flow restriction means (56, 57, 58, 59), so that a combined direct hydraulic steering actuator line feeds a single steering piston (60).

7. Hydraulic steering system (1, 47, 54, 62) according to any of the preceding claims, **characterised in that** at least one, preferably a plurality, more preferably at least essentially all directly connected hydraulic conduits (18, 22, 42, 61) are designed and arranged as a fluid tube and/or **characterised in that** at least a part of least one, preferably a plurality, more preferably at least essentially all indirectly connected hydraulic conduits (14, 15, 28, 29, 35, 36) are designed and arranged as fluid hoses, preferably at least in the section behind the at least one fluid flow influencing means (19, 20, 26, 27, 37, 38, 43, 44, 45, 46, 48, 49, 50, 51).

8. Hydraulic steering system (1, 47, 54, 62) according to any of the preceding claims, **characterised in that** at least a directly connected hydraulic return conduit (28, 29, 34, 35, 61) is directly connected to the hydraulic steering unit (3), wherein the directly connected hydraulic conduits (28, 29, 34, 35) comprise a fluid branch connection (21, 23, 41) that diverges at least one of the directly connected hydraulic conduits (22, 42, 61) to at least two indirectly connected hydraulic conduits (28, 29, 34, 35), preferably in a way that the at least two indirectly connected hydraulic conduits (28, 29, 34, 35, 61) comprise at least one fluid flow influencing means (26, 27, 37, 38, 43, 44, 45, 46, 48, 49, 50, 51), respectively.

9. Hydraulic steering system (1, 47, 54, 62) according to claim 8, wherein at least one hydraulic return conduit (22, 28, 29, 34, 35, 42) is designed and arranged correspondingly to at least one hydraulic conduit (22, 28, 29, 34, 35, 42), preferably to the corresponding hydraulic conduit (22, 28, 29, 34, 35, 42).

10. Hydraulic steering system (1, 47, 54, 62), **characterised in that** at a single hydraulic steering unit (3) is provided, in particular for a single steering task.

11. Hydraulic steering system (1, 47, 54, 62) according to any of the preceding claims, **characterised in that** the hydraulic steering unit (3) is a mechanically operated steering unit, an electrically operated steering unit, or a combination of both.

12. Hydraulic steering system (1, 47, 54, 62) according to any of the preceding claims, **characterised in that** it comprises at least one fluid leakage detector, at least one fluid leakage alerting mechanism and/or at least one fluid leakage emergency mode operation.
